# EUROPEAN PATENT SPECIFICATION

(11) **EP 4 351 912 B1**
(45) Date of publication and mention of the grant of the patent: **16.07.2025**
(21) Application number: 22732249.2
(22) Date of filing: 09.06.2022
(51) Int. Cl.: B60L 3/00, B60L 53/16, H02H 11/00, H02J 3/00, B63J 3/04

(54) **HIGH VOLTAGE SHORE CONNECTION SYSTEM WITH DUAL INTAKE**
HOCHSPANNUNGS-LANDEANSCHLUSSSYSTEM MIT DOPPELEINLASS
SYSTÈME DE RACCORDEMENT À QUAI À HAUTE TENSION À DOUBLE ADMISSION

(30) Priority: 09.06.2021 SE 2150730
(43) Date of publication of application: 17.04.2024
(73) Proprietor: Trident Bmc Ab, 402 71 Göteborg (SE)
(72) Inventor: BERGSTRÖM, Gary, 439 31 Onsala (SE); KRARUP, Lars, 5000 Odense C (DK)
(74) Representative: AWA Sweden AB
(86) International application number: PCT/EP2022/065768
(87) International publication number: WO 2022/258787

(56) References cited:
- EP-A1- 2 980 942
- WO-A1-2009/067722
- WO-A1-2020/242320
- CN-U- 204 012 103
- FR-A1- 2 899 029

## Description

### TECHNICAL FIELD

The present invention relates to a high voltage shore connection (HVSC) system for connection of a vessel in port to electrical supply from the shore-side, and to a vessel comprising such a HVSC system.

### BACKGROUND OF THE INVENTION

Onshore power, also known by a variety of names such as Alternative Maritime Power (AMP) or cold ironing, enables ships at dock or in dry dock to use shoreside electricity to power onboard electrical systems, such as lighting, ventilation, communication, cargo pumps, and other critical equipment, while turning off their auxiliary engines. These ships can be connected to onshore power supplies so ship operations can proceed uninterrupted while eliminating diesel emissions resulting from auxiliary engines, which is environmentally benign since pollution of the surroundings as well as the fuel consumption is reduced. The electricity comes from the local power grid through a substation at the port and is plugged into special power connectors in the shore power system on the ship.

Documents CN204012103U, WO2009/067722A1 or EP2980942A1 disclose systems for providing power to a marine vessel.

Electrical connection between shore and ship is known as High Voltage Shore Connection (HVSC). In order to be compatible with the onshore electricity supply, vessels are normally equipped with an intake on both port side and the starboard side of the vessel. Such an arrangement is normally referred to as a dual high voltage shore connection solution. The reason for arranging the intake on each side of the vessel is enabling the vessel to be moored to a berth with either side facing the berth. An intake may comprise at least one connecting element that may be in the form of a socket into which a plug attached to the power cable from the shore side is connected (shore-to-ship). Alternatively, an intake may be in the form of a cable reel that lowers the cable equipped with a plug to quay side where it is connected to the female sockets (ship-to-shore). The number of connecting elements depends on the type of the vessel as well as power consumption. Thus, when the vessel is roll-on/roll-of (Ro-Ro) vessel, one connecting element is normally arranged on each side, while container ships have two connecting elements on each side, and cruise ships have a plurality of connecting elements on each side, according to IEC 80005-1 standard.

It is intuitively understood that the intake on the side of the vessel facing the berth is connected to the onshore power supply by means of a cable, supplied from either shore to ship or from ship to shore. By such an arrangement, the entire electrical circuit is powered, including the intake not being connected to the onshore power supply. Since the intakes are easily accessible, the powered unplugged intake constitutes a potential electric hazard.

In a typical dual shore connection solution, the two intakes on the vessel are electrically separated from each other in order to prevent powering of parts on the intake side not being connected to the onshore electricity supply.

One such a solution is providing two intakes that may be electrically isolated with breakers. The breakers are interlocked, so they can never be closed at the same time. Another option is to use two intakes being electrically isolated with a manual switch placed outside the shore connection switchboard. This solution is more advantageous than using breakers and reduces the amount of cables to be pulled on the vessel. However, both of the above-mentioned solutions suffer from the disadvantage of comprising expensive components that need frequent service.

In view of the above, it is desired to provide a dual high voltage shore connection system that eliminates the shortcomings of the existing solutions, that is simple and cost-efficient, and that provides a safe connection to the onshore electricity supply.

### SUMMARY OF THE INVENTION

In view of the above, the present invention provides a high voltage shore connection (HVSC) system with dual intake for connection of a vessel in port to electrical supply from the shore-side. In the context of the present invention, the term "high voltage" includes a voltage of at least 1 kV. It should be mentioned that the vessel may be of any type known in the art, such as a container vessel, a cruise vessel, a ferry, a roll-on roll-of (RoRo) vessel, a roll-on roll-of passenger (RoPax) vessel, a tanker, a hangar vessel or the like. The system of the present invention comprises a first intake, preferably arranged on the port side of the vessel. Alternatively, the first intake may be arranged on the fore side of the vessel, or on the aft side of the vessel. The first intake comprises at least one first connecting element. The number of connecting elements depends on the type and the required voltage of the vessel and is governed by an international standard (ISO/IEC/IEEC 80005-1).

The HVSC system of the present invention further comprises a second intake, preferably arranged on the side of the vessel being opposite to the side of the vessel on which the first intake is arranged. Thus, when the first intake is arranged on the port side, the second intake is preferably arranged on the starboard side of the vessel. As mentioned above, such a configuration allows connection of the vessel the onshore electric supply regardless of which the side of the vehicle is facing the berth. The second intake comprising at least one second connecting element. Usually, the number of second connecting elements is equal to the number of first connecting elements. The second intake is in electrical connection with the first intake. In other words, when one of the first intake and the second intake is connected to the onshore power supply, the other of the first intake and the second intake not being connected to the onshore power supply is powered.

It should be noted that the present invention eliminates the need for an electrical breaker arranged for disconnecting the intake not being connected to the onshore power supply, which provides a cost efficient and simple HVSC system.

The at least one first connecting element and the at least one second connecting element are connectable to a power supply element for supplying onshore electricity. The power supply element is connected to the onshore power grid. The power supply element may terminate a shore power cable (shore-to-ship connection) or may be arranged as a HVSC receptacle (ship-to-shore connection).

The HVSC system of the present invention may comprise a HVSC switch arranged in electrical connection with the first intake and the second intake.

The HVSC system of the present invention may further comprise a HVSC breaker arranged in electrical connection with the HVSC switchboard. The HVSC breaker may be a part of the vessel main switchboard. The electric power is supplied from the HVSC system to the vessel main switchboard.

The HVSC system according to the present invention further comprises a safety circuit element electrically connected to the first intake and the second intake. The term "electrically connected" is herein understood to encompass both wireless and wired connection. Such a safety circuit element may be arranged according to IEC-80005-1 standard and may constitute a failsafe electrical hardwired loop from shore to vessel. In case of any fault, such as loss of equipotential bonding, high cable tension or shortage of remaining cable length, "safety circuit pilot loop" failure, manual activation of the emergency stop system, disconnection of plugs while energized, opening the intake box or the like, the loop is opened, and the emergency shutdown is initiated on both shore and vessel.

The intake connected to the onshore power supply will hereinafter be referred to as "plugged intake", while the intake not being connected to the onshore power supply will hereinafter be referred to as "unplugged intake". As mentioned above, powered unplugged intake thus constitutes a potential electric hazard, which has to be eliminated.

To this end, the HVSC system according to the present invention comprises at least one protecting element being connectable to the at least one first connecting element or the at least one second connecting element, whichever connecting element not being connected to the power supply element. By the term "connectable" is in the context of the present invention understood as being in brought into electrical connection. It should be noted that the power contacts that may be present in the protecting element are not electrically connected to the safety circuit element, but rather become isolated.

The at least one protecting element of the present invention is arranged to block access to the at least one first connecting element or the at least one second connecting element, whichever connecting element not being connected to the power supply element. In other words, the at least one protecting element is arranged to block access to the unplugged intake. By the term "to block access" is meant that a person, an animal or a machine is unable to establish physical contact with the connecting element, either directly, e.g. by touching, or indirectly, e.g. by means of a tool.

In order to improve safety of the HVSC system even further, the at least one protecting element comprises a safety loop being electrically connectable to the safety circuit element. The connection between the safety circuit element and the safety loop may be wired or wireless. Such a safety loop may be a wire loop inside the protecting element. By bridging the safety loop in the protecting element it is ensured that the HVSC system will trip before the protecting element is removed and any powered parts of the unplugged intake become accessible.

It is conceivable that the number of protecting elements is equal to the number of connecting elements. Alternatively, the number of protecting elements may be greater than the number of connecting elements.

The vessel may comprise a mandatory standard safety circuit according to the IEC 80005-1, the safety circuit element being arranged to interlock the safety circuit.

The at least one first connecting element and the at least one second connecting element may be of any suitable type. The at least one first connecting element and the at least one second connecting element may be same or different. Further, when a plurality of first connecting elements is present, the first connecting elements within the plurality of first connecting elements may be same or different. Analogously, when a plurality of second connecting elements is present, the second connecting elements within the plurality of second connecting elements may be same or different. The at least one first connecting element and/or the at least one second connecting element may be a female connecting element. It is conceivable that the female connecting element is a socket. According to such an embodiment, the at least one protecting element is a male protecting element, such as an isolating plug. When the HVSC system is powered by connecting one of the first intake and the second intake to the onshore power supply, the female connecting elements of the powered unplugged intake are connected to the male protecting elements.

Alternatively, the at least one first connecting element and/or the at least one second connecting element may be a male connecting element. It is conceivable that the male connecting element is a plug. According to such an embodiment, the at least one protecting element is a female protecting element, such as an isolating socket. When the HVSC system is powered by connecting one of the first intake and the second intake to the onshore power supply, the male connecting elements of the powered unplugged intake are connected to the female protecting elements.

In order to eliminate the risk of improper or erroneous connection, the connecting element and the corresponding protecting element may comprise similar identification features. For instance, the connecting element and the corresponding protecting element may have the same color.

The at least one protecting element may comprise an electrically isolating (insulating) material, such that humans or animals are protected from electric shock should they unintentionally come in contact with the protecting element. In particular, the protecting element may be a male protecting element, such as an isolating plug, filled with molding compound in the insulation sleeve where the power cables are normally connected. The end of the isolating plug may be closed by a polyoxymethylene plastic rod. The isolating plug may have the same IP rating as a standard plug with cables attached. In particular, the at least one protecting element is a plug according to IEC 80005-1 standard, further referring to IEC 62613-2 standard. By such a configuration, the same ingress protection is provided for the unplugged intake as for the plugged intake.

As mentioned above, the protecting element of the present invention is used to enclose/isolate the powered intake from access and to close the safety circuit element such that power may be supplied to the vessel from the shore side. Further, the protecting element prevents dust and moisture from entering the connecting element. Additionally, the protecting element is necessary in order to comply with the rules for electrical clearance and creepage distance. By the term "clearance" is understood the shortest distance in the air between two conductors, and by the term "creepage" is understood the shortest distance to another conductor along the surface of the insulating material. The higher the voltage, the greater the distances.

The length of the insulation sleeve itself on the conventional male protecting element may be sufficient for complying with the above-mentioned distances. However, by filling the protecting element with a moulding compound and enclosing the protecting element in a cabinet, the risk for an unintentional contact with the powered intake is eliminated.

According to the present invention, the HVSC system may comprise at least one security element arranged in proximity of the connecting element. Such a security element may be arranged at a distance of from 0 cm to 30 cm from the connecting element. Such a distance may be considered as sufficient for preventing electrocution of humans or animals. In particular, the security element may be a latch. In other words, the powered unplugged intake connected to the protecting element may be enclosed in a compartment comprising a latch, wherein the latch blocks access to the powered unplugged intake thus eliminating the electrical hazard. The security element may be arranged such that it provides an audibly and/or visually perceivable signal to the user should the user try to interact with the security element while the HVSC system is powered. Further, the security element may be electrically connected to the safety circuit element such that the HVSC system shuts down if the security element is displaced.

Such an embodiment offers the advantage of increased safety since access to the powered unplugged intake will be blocked by both the protecting element and the security element.

According to the present invention, the first intake and the second intake may be arranged in parallel electrical connection, such that the voltage in both intakes is equal.

Alternatively, or additionally, the security element may be a sensor, arranged to generate a signal upon presence or contact of a human, an animal or a machine with the protecting element, and initiate depowering upon detection of such a signal. The security element may further be a handle arranged to lock the protecting element in position once the protecting element is connected to the connecting element. The security element may be accompanied by an alerting element that is activated along with activation of the depowering procedure. Such an alerting element may be a lamp, a siren, a text message or combination thereof, notifying the user that the depowering process has been initiated.

As mentioned above, the safety element may be a part of the safety circuit element. Further, once the safety circuit element is broken, the safety systems on both shore side and ship side are notified accordingly.

As mentioned above, the power supply element may be attached to a shore power cable. Such a configuration is referred to as shore-to-ship connection. Alternatively, the power supply element may be arranged as a HVSC receptacle (ship-to-shore connection). The power supply element is connected to the onshore power grid.

When ship-to-shore connection is used, the at least one of the first intake and the second intake may be in the form of at least one cable reel comprising a ship power cable. The ship power cable is electrically connectable to the power supply element, such as a HVSC receptacle. The other end of the ship power cable is connectable to a connecting element.

Sometimes it may be desirable to replace the cable reel on each side of the vessel with a mobile connection solution. In this case, a first and a second cable reel may be placed in a container. The first cable reel comprising a ship power cable arranged to be attached to the power supply element is arranged such that the ship power cable may extend in two opposite directions. The second cable reel comprises a connection power cable one end of which is connected to the first cable reel, and the other end of which is connectable to the connecting element. Such a ship-to-shore connection solution provides great flexibility, since the container may easily be moved between e.g. the port side and the starboard side of the vessel, depending on which side of the vessel is facing the berth.

It is understood that the HVSC system of the present invention shall comply with the existing regulations and standards. Further, the HVSC system should be located in areas where it cannot be damaged by in-port activities or vessel activities under normal operational circumstances. The HVSC system should be compatible with the forces, moments and deflections resulting from the movement of the moored ship under normal operational circumstances.

It is implicitly understood that the HVSC system described above may comprise additional components, such as earthing elements, circuit breakers, step-down (or isolation) transformer, and associated instrumentation.

The present invention further relates to a vessel comprising a HVSC system as described above. The vessel according to the present invention may further comprise a main vessel switchboard electrically connected to the first intake and the second intake and being arranged to distribute onshore electricity. The main vessel switchboard is arranged to distribute the power from the power sources to the power consumers onboard. The HVSC breaker may then be arranged on the main vessel switchboard. The HVSC switchboard may be arranged between the first intake and the second intake on one side and the main vessel switchboard on the other side. The power from HVSC is fed to the main vessel switchboard through the HVSC breaker and then distributed.

### BRIEF DESCRIPTION OF THE DRAWINGS

Embodiments of the invention will now be described by way of example with reference to the accompanying drawings, of which:
Figs. 1-3 is a schematic view of the HVSC systems according to the prior art;
Fig. 4 is a schematic view of the HVSC system according to the present invention;
Fig. 5 shows a safety circuit element principle for container vessel with isolating plugs as protecting elements;
Figs. 6a and 6b depict standard isolating plugs with safety circuit element connections for a container vessel;
Figs. 7 illustrates a safety circuit element principle for a RoRo vessel with isolating plugs as protecting elements.

### DETAILED DESCRIPTION OF THE INVENTION

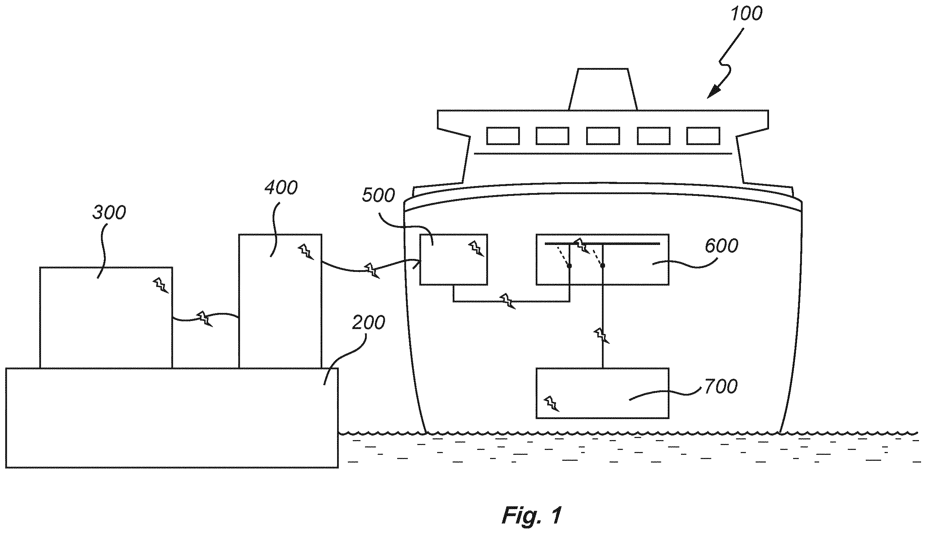

Figs. 1-3 depict HVSC systems according to the prior art. In Fig. 1, the vessel 100 is moored to the berth 200 such that the first intake 500 is facing the berth 200. The berth 200 is equipped with a shore power supply 300 and a cable management system 400. As may be seen in Fig. 1, the first intake 500 is connected to the shore power supply 300, thus providing electricity to the consumers onboard via the HVSC switchboard 600 and the vessel switchboard 700. As is evident from Fig. 1, the vessel 100 does not have a second intake, and the risk for unintentional electrocution is therefore non-existent. The embodiment depicted in Fig. 1 suffers from disadvantage of rather limited possibilities to moor the vessel, since the side of the vessel comprising the first intake 500 has to face the berth.

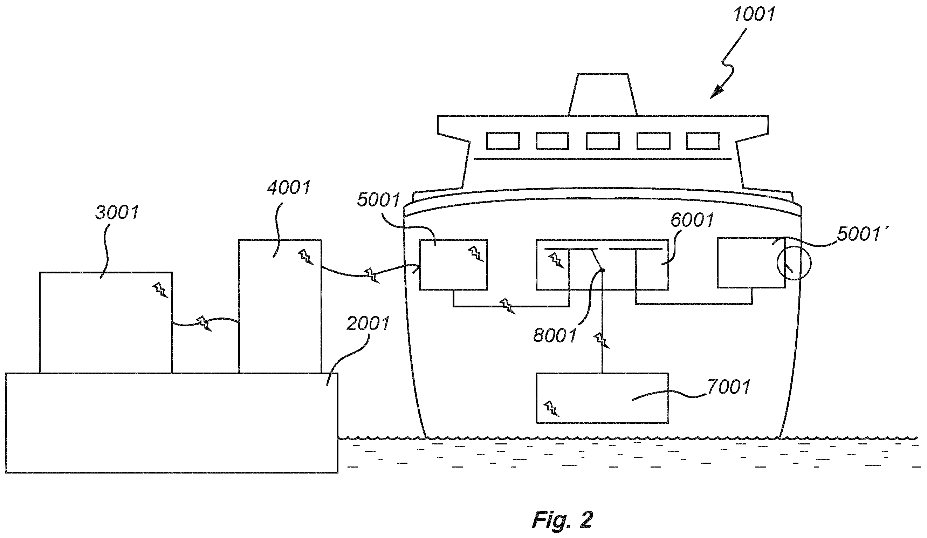

Another embodiment according to the prior art is shown in Fig. 2. The vessel 1001 comprises a first intake 5001 and a second intake 5001' arranged on the opposite side of the vessel 1001 in relation to the first intake 5001. The HVSC switch board comprises a switch 8001 for selecting the intake being connected to the vessel switchboard 7001. As mentioned above, the switch 8001 is an expensive component, thus adding overall cost to the system.

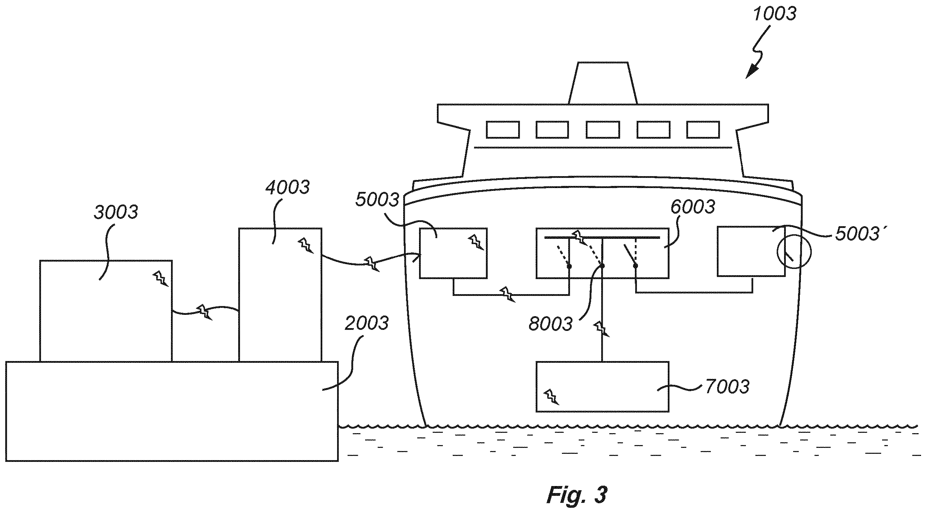

Fig. 3 depicts yet another embodiment according to the prior art. The HVSC switchboard 6003 comprises two switches that may be operated such that the second intake 5003' is electrically separated from the first intake 5003. In analogy with the above, this embodiment suffers from the disadvantage of requiring a number of switches.

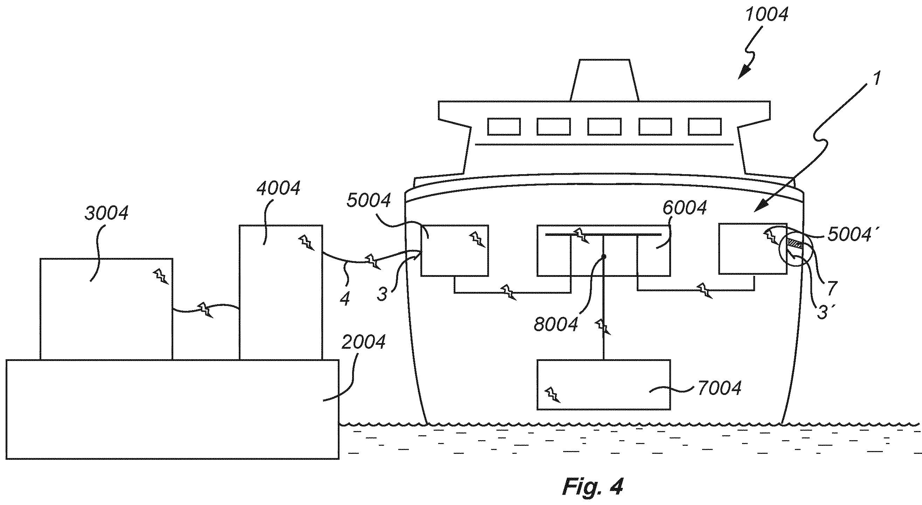

Fig. 4 illustrates a HVSC system according to the present invention. The vessel 1004 is moored to the berth 2004 such that the first intake 5004 is connected to the shore power supply 3004. The cable management system may be arranged on the shore side or on the ship side. The first intake 5004 is electrically connected to the second intake 5004'. It is important to note that the HVSC switchboard 6004 comprises only one HVSC electromechanical switch 8004, thus offering the advantage of a simple and cost-efficient system. In order to enable the power supply from the shore power supply 3004 to the vessel 1004, the connecting element of the second intake 5004' is connected to a protecting element 7. As described above, the safety loop present in the protecting element 7 is electrically connected to the safety circuit element of the HVSC system when the protecting element 7 is connected to the connecting element of the second intake 5004', thus closing the safety circuit element. Once the safety circuit element is closed, the power from the shore power supply may be delivered to the vessel 1004.

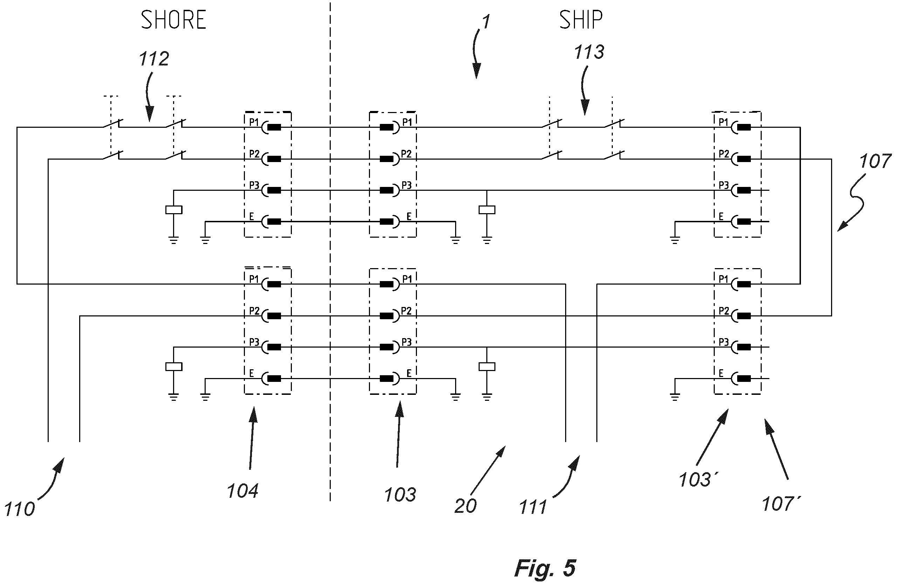

Fig. 5 illustrates a safety circuit element 20 for the HVSC system in a container vessel. The first connecting element 103, being a female element is connected to the power supply element 104, also being a female element. The first connecting element 103 and the power supply element 104 are interconnected by a cable having male contacts at both ends. The safety circuit element 20 is electrically connected to the first intake 5004 and the second intake 5004'. Such a safety circuit element 20 may be arranged according to IEC-80005-1 standard and may constitute a failsafe electrical hardwired loop from shore to vessel. In case of any fault, such as loss of equipotential bonding, high cable tension or shortage of remaining cable length, "safety circuit pilot loop" failure, manual activation of the emergency stop system, disconnection of plugs while energized, opening the intake box or the like, the loop is opened, and the emergency shutdown is initiated on both shore and vessel.

The safety circuit element 20 contains the shore side safety loop 110 comprising a plurality of safety measure contacts 112, e.g. emergency breaks, door sensors or the like. Further, the safety circuit element 20 further contains the ship side safety loop 111 comprising a plurality of safety measure contacts.

In order to improve safety of the HVSC system even further, the protecting element 107 comprises a safety loop being in electrical connection with the safety circuit element 20 described above. As may be seen in Fig. 5, the male contacts 107' of the protecting element 107 are connected to the female connecting element 103'. Such a safety loop is a wire loop inside the protecting element, in this embodiment extending between the respective pins P1 and P2 of each isolating plug. By bridging the safety loop in the protecting element it is ensured that the HVSC system 20 will trip before the protecting element 107 is removed and any powered parts of the unplugged intake become accessible.

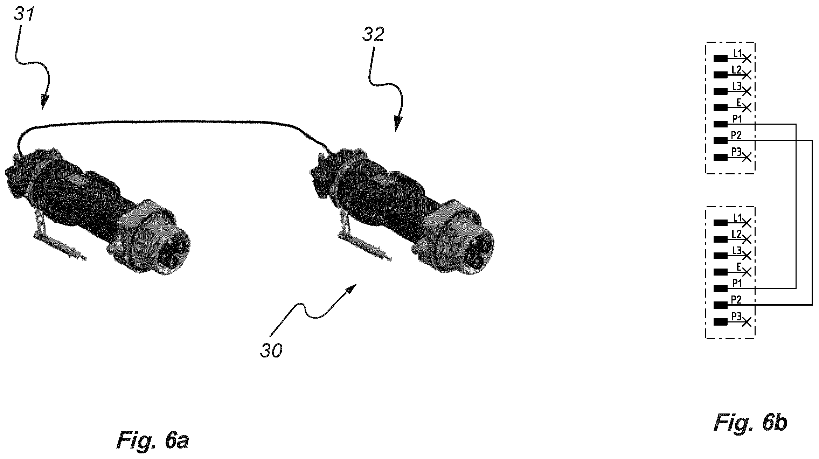

Figs. 6a and 6b depict a possible embodiment of a protecting element 30 according to the present invention. The protecting element 30 is in the form of two isolating plugs. The isolating plugs depicted in Fig. 6a are made by customizing original plugs made according to IEC 62613-2 "HVSC Plugs & Socket Outlets".

The safety circuit element pins P1 and P2 shown in Fig. 6b are bridged from one plug to another by a cable. Pins L1, L2, L3, E and P3 are not used.

The plugs 31, 32 are filled with molding compound in the insulation sleeve where the power cables are normally connected (P1, P2 and P3). The end of the isolating plug is closed by a polyoxymethylene plastic rod with a cable gland for the safety circuit element cable. The isolating plugs 31, 32 will have the same IP rating as a standard plug with cables attached.

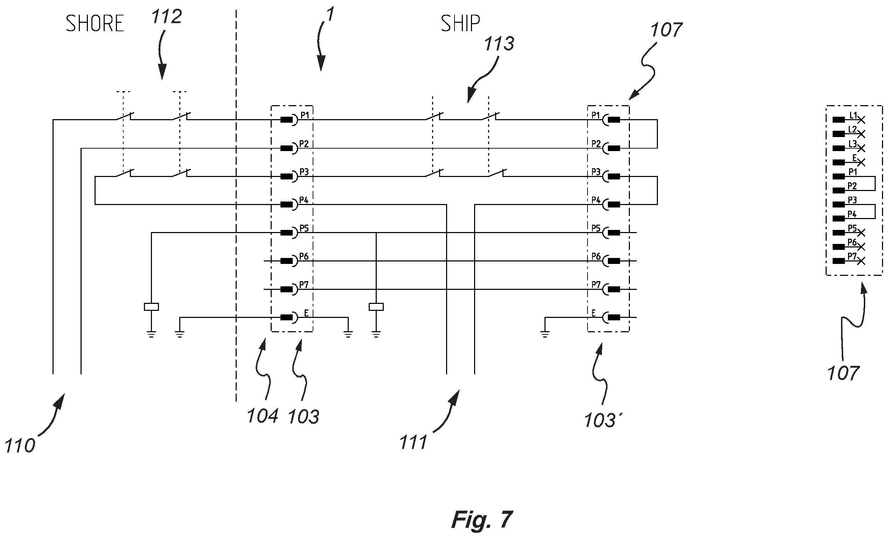

Finally, Fig. 7 illustrates an embodiment being similar to the configuration depicted in Fig. 5. However, in Fig. 7 each of the first intake and the second intake each comprise one female connecting element 103, 103'. The safety circuit element pins P1 and P2 as well as P3 and P4 of the protecting element are bridged to each other, respectively. The pins P1-P4 of the protecting element 107 are connected to the second connecting element 103'. The right part of Fig. 7 depicts the pins inside the protecting element. Pins L1-L3 are power pins, pin E is the earth, and pins P5-P7 are not used in the HVSC system of the present invention. The first connecting element 103 is connected to the male power supply element 104. It should be noted that the power supply lines of the power supply element are not depicted in Fig. 5 and 7, but rather safety circuit.

Although the present invention has been described with reference to various embodiments, those skilled in the art will recognize that changes may be made without departing from the scope of the invention. It is intended that the detailed description be regarded as illustrative and that the appended claims are intended to define the scope of the invention.

## Claims

1. A high voltage shore connection (HVSC) system (1) for connection of a vessel (1004) in port to electrical supply from the shore-side, said system (1) comprising:
a first intake (5004) comprising at least one first connecting element (3);
a second intake (5004') comprising at least one second connecting element (3'), said second intake (5004') being in electrical connection with said first intake (5004);
said at least one first connecting element (3) and said at least one second connecting element (3') being connectable to a power supply element (4) for supplying onshore electricity;
a safety circuit element (20) being in electrical connection with said first intake (5004)
and said second intake (5004'), and **characterized in that**
the safety circuit element comprises at least one safety loop (110, 111); wherein said system (1) further comprises at least one protecting element (7) being connectable to said at least one first connecting element (3) or said at least one second connecting element (3'), whichever connecting element (3, 3') not being connected to said power supply element (4);
said at least one protecting element (7, 107) comprising a safety loop being electrically connectable to said safety circuit element (20).

2. The HVSC system (1) according to claim 1, wherein said vessel (1004) comprises a safety circuit, said safety circuit element is arranged to interlock said safety circuit.

3. The HVSC system (1) according to any one of the preceding claims, wherein at least one of said at least one first connecting element (3) and said at least one second connecting element (3') is a female connecting element.

4. The HVSC system (1) according to claim 3, wherein said at least one protecting element (7) is a male protecting element.

5. The HVSC system (1) according to claim 1-2, wherein at least one of said at least one first connecting element (3) and said at least one second connecting element (3') is a male connecting element.

6. The HVSC system (1) according to claim 5, wherein said at least one protecting element (7) is a female protecting element.

7. The HVSC system (1) according to any one of the preceding claims, wherein said at least one protecting element (7) comprises an electrically isolating material.

8. The HVSC system according to any one of the preceding claims, wherein said HVSC system further comprises only one HVSC electromechanical switch (5) arranged in electrical connection with said first intake (2) and said second intake (2') for distribution of electrical power from the first intake (2) or the second intake (2') to the electrical loads of the vessel.

9. The HVSC system according to claim 8, wherein said HVSC system further comprises a HVSC breaker arranged in electrical connection with said HVSC switch (5).

10. The HVSC system (1) according to any one of the preceding claims, wherein said at least one protecting element (7) is a plug according to IEC 80005-1 standard.

11. The HVSC system (1) according to any one of the preceding claims, wherein said first intake (5004) and said second intake (5004') are arranged in parallel electrical connection.

12. The HVSC system (1) according to any one of the preceding claims, wherein said power supply element (4) is attached to a shore power cable.

13. The HVSC system (101) according to any one of claims 1-11, wherein at least one of said first intake (5004) and said second intake (5004') comprises at least one cable reel comprising a ship power cable, and wherein said ship power cable is electrically connectable to said power supply element (4).

14. A vessel (1004) comprising a HVSC system (1) according to any one of claims 1-13.

15. The vessel (1004) according to claim 14, wherein said first intake (5004) of said HVSC system (1) is arranged on the port side of said vessel (1004) and said second intake (5004') is arranged on the starboard side of said vessel (1004).

## Patentansprüche

1. Hochspannungs-Landeanschluss-(HVSC-, high voltage shore connection)System (1) zum Anschließen eines Schiffes (1004) im Hafen an die Stromversorgung von der Landeseite, wobei das System (1) Folgendes umfasst:
einen ersten Einlass (5004), umfassend mindestens ein erstes Anschlusselement (3);
einen zweiten Einlass (5004'), umfassend mindestens ein zweites Anschlusselement (3'), wobei der zweite Einlass (5004') in elektrischem Anschluss mit dem ersten Einlass (5004) steht;
wobei das mindestens eine erste Anschlusselement (3) und das mindestens eine zweite Anschlusselement (3') an ein Leistungsversorgungselement (4) zum Versorgen mit Landestrom anschließbar sind;
ein Sicherheitsschaltungselement (20), das in elektrischem Anschluss mit dem ersten Einlass (5004) und dem zweiten Einlass (5004') steht und
**dadurch gekennzeichnet, dass**
das Sicherheitsschaltungselement mindestens eine Sicherheitsschleife (110, 111) umfasst;
wobei das System (1) ferner mindestens ein Schutzelement (7) umfasst, das mit dem mindestens einen ersten Anschlusselement (3) oder dem mindestens einen zweiten Anschlusselement (3') anschließbar ist, welches Anschlusselement (3, 3') auch immer nicht mit dem Leistungsversorgungselement (4) angeschlossen ist;
wobei das mindestens eine Schutzelement (7, 107) eine Sicherheitsschleife umfasst, die mit dem Sicherheitsschaltungselement (20) elektrisch anschließbar ist.

2. HVSC-System (1) nach Anspruch 1, wobei das Schiff (1004) eine Sicherheitsschaltung umfasst und das Sicherheitsschaltungselement so angeordnet ist, dass es die Sicherheitsschaltung verriegelt.

3. HVSC-System (1) nach einem der vorhergehenden Ansprüche, wobei mindestens eines des mindestens einen ersten Anschlusselements (3) und des mindestens einen zweiten Anschlusselements (3') ein Buchsenanschlusselement ist.

4. HVSC-System (1) nach Anspruch 3, wobei das mindestens eine Schutzelement (7) ein Steckschutzelement ist.

5. HVSC-System (1) nach Anspruch 1-2, wobei mindestens eines des mindestens einen ersten Anschlusselements (3) und des mindestens einen zweiten Anschlusselements (3') ein Steckanschlusselement ist.

6. HVSC-System (1) nach Anspruch 5, wobei das mindestens eine Schutzelement (7) ein Buchsenschutzelement ist.

7. HVSC-System (1) nach einem der vorhergehenden Ansprüche, wobei das mindestens eine Schutzelement (7) ein elektrisch isolierendes Material umfasst.

8. HVSC-System nach einem der vorhergehenden Ansprüche, wobei das HVSC-System ferner nur einen elektromechanischen HVSC-Schalter (5) umfasst, der in elektrischem Anschluss mit dem ersten Einlass (2) und dem zweiten Einlass (2') angeordnet ist, um die elektrische Leistung von dem ersten Einlass (2) oder von dem zweiten Einlass (2') auf die elektrischen Lasten des Schiffes zu verteilen.

9. HVSC-System nach Anspruch 8, wobei das HVSC-System ferner einen HVSC-Schutzschalter umfasst, der in elektrischem Anschluss mit dem HVSC-Schalter (5) angeordnet ist.

10. HVSC-System (1) nach einem der vorhergehenden Ansprüche, wobei das mindestens eine Schutzelement (7) ein Stecker gemäß der Norm IEC 80005-1 ist.

11. HVSC-System (1) nach einem der vorhergehenden Ansprüche, wobei der erste Einlass (5004) und der zweite Einlass (5004') in parallelem elektrischem Anschluss angeordnet sind.

12. HVSC-System (1) nach einem der vorhergehenden Ansprüche, wobei das Leistungsversorgungselement (4) an ein Landstromkabel angebracht ist.

13. HVSC-System (101) nach einem der Ansprüche 1-11, wobei mindestens einer des ersten Einlasses (5004) und des zweiten Einlasses (5004') mindestens eine Kabeltrommel umfasst, die ein Schiffsstromkabel umfasst, und wobei das Schiffsstromkabel mit dem Leistungsversorgungselement (4) elektrisch anschließbar ist.

14. Schiff (1004), umfassend ein HVSC-System (1) nach einem der Ansprüche 1-13.

15. Schiff (1004) nach Anspruch 14, wobei der erste Einlass (5004) des HVSC-Systems (1) an der Backbordseite des Schiffs (1004) und der zweite Einlass (5004') an der Steuerbordseite des Schiffs (1004) angeordnet ist.

## Revendications

1. Système de connexion haute tension à quai (HVSC) (1) pour le raccordement d'un navire (1004) au port à l'alimentation électrique terrestre, ledit système (1) comprenant :
une première prise d'alimentation (5004) comprenant au moins un premier élément de connexion (3) ;
une deuxième prise d'alimentation (5004') comprenant au moins un deuxième élément de connexion (3'), ladite deuxième prise d'alimentation (5004') étant en connexion électrique avec ladite première prise d'alimentation (5004) ;
ledit au moins un premier élément de connexion (3) et ledit au moins un deuxième élément de connexion (3') pouvant être connectés à un élément d'alimentation électrique (4) pour l'alimentation électrique terrestre ;
un élément de circuit de sécurité (20) étant en connexion électrique avec ladite première prise d'alimentation (5004) et ladite deuxième prise d'alimentation (5004'), et
**caractérisé en ce que**
l'élément de circuit de sécurité comprend au moins une boucle de sécurité (110, 111) ;
dans lequel ledit système (1) comprend en outre au moins un élément de protection (7) pouvant être connecté audit au moins un premier élément de connexion (3) ou audit au moins un deuxième élément de connexion (3'), un quelconque élément de connexion (3, 3') n'étant pas connecté audit élément d'alimentation électrique (4) ;
ledit au moins un élément de protection (7, 107) comprenant une boucle de sécurité pouvant être connectée électriquement audit élément de circuit de sécurité (20).

2. Système HVSC (1) selon la revendication 1, dans lequel ledit navire (1004) comprend un circuit de sécurité, ledit élément de circuit de sécurité étant agencé pour verrouiller ledit circuit de sécurité.

3. Système HVSC (1) selon une quelconque des revendications précédentes, dans lequel au moins un dudit au moins premier élément de connexion (3) et dudit au moins un deuxième élément de connexion (3') est un élément de connexion femelle.

4. Système HVSC (1) selon la revendication 3, dans lequel ledit au moins un élément de protection (7) est un élément de protection mâle.

5. Système HVSC (1) selon les revendications 1 et 2, dans lequel au moins un dudit au moins premier élément de connexion (3) et dudit au moins un deuxième élément de connexion (3') est un élément de connexion mâle.

6. Système HVSC (1) selon la revendication 5, dans lequel ledit au moins un élément de protection (7) est un élément de protection femelle.

7. Système HVSC (1) selon une quelconque des revendications précédentes, dans lequel ledit au moins un élément de protection (7) est constitué d'un matériau électriquement isolant.

8. Système HVSC selon une quelconque des revendications précédentes, dans lequel ledit système HVSC comprend en outre un seul interrupteur électromécanique HVSC (5) disposé en connexion électrique avec ladite première prise d'alimentation (2) et ladite deuxième prise d'alimentation (2') pour la distribution d'énergie électrique de la première prise d'alimentation (2) ou de la deuxième prise d'alimentation (2') aux charges électriques du navire.

9. Système HVSC selon la revendication 8, dans lequel ledit système HVSC comprend en outre un disjoncteur HVSC disposé en connexion électrique avec ledit interrupteur HVSC (5).

10. Système HVSC (1) selon une quelconque des revendications précédentes, dans lequel ledit au moins un élément de protection (7) est une prise conforme à la norme CEI 80005-1.

11. Système HVSC (1) selon une quelconque des revendications précédentes, dans lequel ladite première prise d'alimentation (5004) et ladite deuxième prise d'alimentation (5004') sont disposées en connexion électrique parallèle.

12. Système HVSC (1) selon une quelconque des revendications précédentes, dans lequel ledit élément d'alimentation électrique (4) est fixé à un câble d'alimentation à quai.

13. Système HVSC (101) selon une quelconque des revendications 1 à 11, dans lequel au moins une desdites première prise d'alimentation (5004) et deuxième prise d'alimentation (5004') comprend au moins un enrouleur de câble comprenant un câble d'alimentation de navire et dans lequel ledit câble d'alimentation de navire pouvant être connecté électriquement audit élément d'alimentation électrique (4).

14. Navire (1004) comprenant un système HVSC (1) selon une quelconque des revendications 1 à 13.

15. Navire (1004) selon la revendication 14, dans lequel ladite première prise d'alimentation (5004) dudit système HVSC (1) est disposée à bâbord dudit navire (1004) et ladite deuxième prise d'alimentation (5004') est disposée à tribord dudit navire (1004).
